# EUROPEAN PATENT SPECIFICATION

(11) **EP 2 079 887 B1**
(45) Date of publication and mention of the grant of the patent: **29.11.2017**
(21) Application number: 07835154.1
(22) Date of filing: 30.10.2007
(51) Int. Cl.: F16L 3/127, F16L 3/137, E04D 13/08, F16L 3/12

(54) **DOWNPIPE HOLDER WITH AN ECCENTRIC**
FALLROHRHALTER MIT EINEM EXZENTER
SUPPPORT DE TUYAU DE DESCENTE AVEC UN EXCENTRIQUE

(30) Priority: 03.11.2006 SE 0602323
(43) Date of publication of application: 22.07.2009
(73) Proprietor: PLANNJA AB, 971 88 Lulea (SE)
(72) Inventor: AXELSSON, Claes, 57432 Vetlanda (SE); HENRYSSON, Torbjörn, S-570 15 Holsbybrunn (SE); LARSSON, Lars, Gunnar, S-570 81 Järnforsen (SE); RUNSTEN, Gustav, S-570 81 Järnforsen (SE); STÅHLGREN, Björn, S-570 81 Järnforsen (SE)
(74) Representative: Westerholm, Carl Christian
(86) International application number: PCT/SE2007/000954
(87) International publication number: WO 2008/054285

(56) References cited:
- WO-A1-96/07829
- WO-A1-2007/032040
- AT-B- 104 885
- DE-A1- 3 843 739
- DE-A1- 10 110 404
- DE-C- 337 002
- DE-U1- 7 638 505
- SE-C2- 508 849
- US-A- 3 737 180

## Description

### Technical field

The present invention relates to a downpipe holder comprising a bent metal sheet, in which the downpipe can be inserted, and means at both end portions of the metal sheet for engagement with each other to clamp the downpipe in the downpipe holder.

### Background of the invention

A downpipe holder is mounted to the wall and the downpipe is mounted in the downpipe holder of sheet steel. There are different methods to clamp the downpipe in the downpipe holder. The most common method is with a separate wedge which clamps together the ends of the downpipe holder. Another solution is shown in WO98/27294SE. The disclosed downpipe holder is resilient so that its ends can be snapped together. The use of an eccentric for another kind of a downpipe holder is disclosed in DE 3843739.

### Brief description of the present invention

According to the present invention, one means of one of the end portions include an eccentric rotatably mounted in an aperture at one end portion and overlapping the other end portion. The eccentric is in engagement with said means of the other end portion such that a turning of the eccentric clamps the holder around the downpipe. The invention is defined by the claims.

### Brief description of the drawings

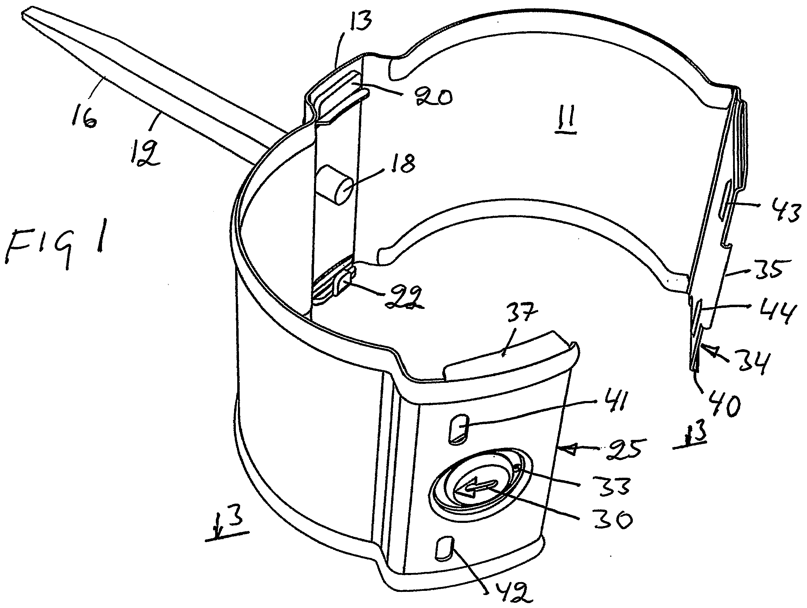

**Figure 1** is a perspective view of an inventive downpipe holder shown as an example of the invention.
**Figure 2** is a perspective view from the back of the downpipe holder and without an in figure 1 shown wall bracket.
**Figure 3** is a section taken along the line 3-3 i figures 1 and 2 with the ends of the holder hooked together.
**Figure 4** corresponds to figure 3 but shows the downpipe holder in the position where it locks a downpipe.
**Figure 5** is a perspective view which shows the wall bracket from figure 1 separately.

### Detailed description of the preferred embodiment

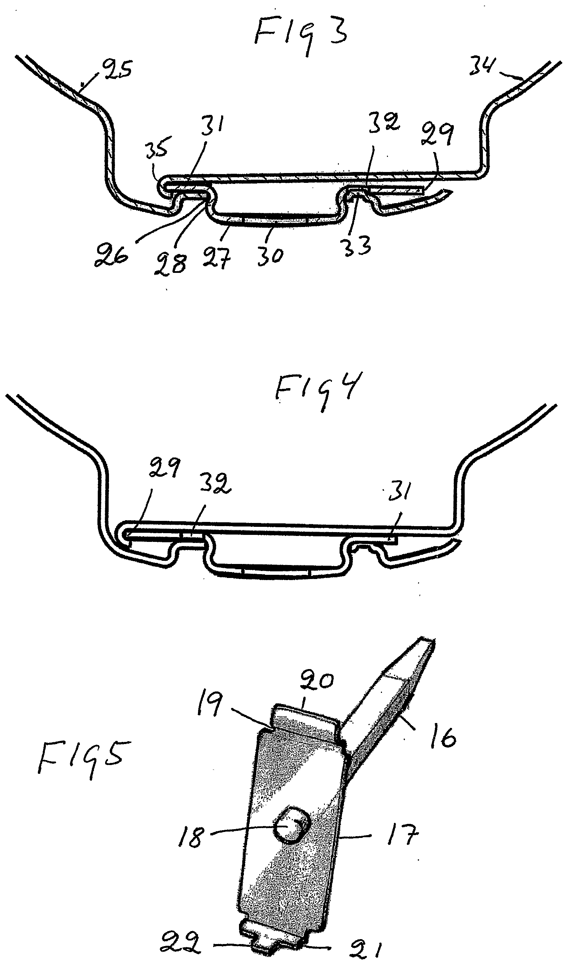

The downpipe holder consists of a bent metal sheet 11 and it has a detachable wall bracket 12. The back of the holder has a vertically oriented raised portion 13 with a slot 15 in the upper part and an aperture 14 below the slot. The aperture 14 is placed in the vertical middle section of the holder. The wall bracket 12 consists of a spike 16 fastened to a plate 17, which is best shown in figure 5. The plate has an aperture and the spike has an end 18 which extends through the aperture. The plate and the spike are welded together. The plate has a step 19 which provides an offset flap 20 at the top, and it has a folded bottom end 21 with a locking flap 22. The spike 16 is used e. g. for brick walls. For concrete walls, a screw which is screwed into a plug in a drilled hole in the concrete is often used instead. For wooden walls, a different type of mean of attachment is commonly used, but a spike could be used.

One end portion 25 of the holder has a circular aperture 26 and a metal sheet 27 has a circular raised portion 28 with an S-shaped side which is snapped into the circular aperture and becomes rotatable in the aperture. The periphery of the metal sheet is eccentric in relation to the aperture 26 and the raised portion 28, and its most eccentric portion 29 is straight. Its least eccentric portion is marked as 31. Thus, the metal sheet 27 forms an eccentric.

The circular raised portion has a slot 30. A chisel or the like can be inserted into the slot to turn the metal sheet 27, that is, the eccentric 27. The eccentric 27 has an aperture 32 and the end portion 25 has a bump 33 which fits in the aperture 32 when the eccentric is in the position shown in figure 3. The holder is delivered with the eccentric in this position and the aperture and bump forms a snap function 32,33 which secures this delivery position.

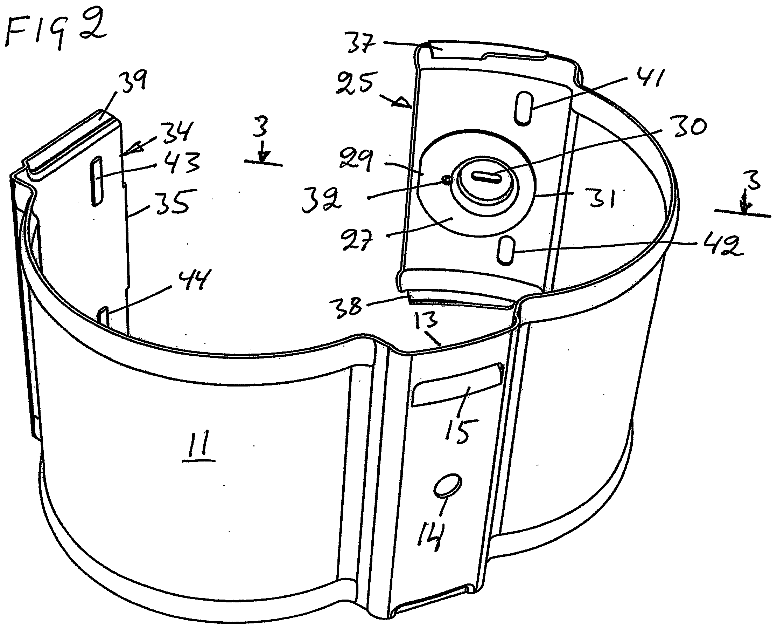

The second end portion 34 of the holder has an outward directed hook 35. As the eccentric 27 is turned to its position shown in figures 2 and 3, the holder can be snapped together by the hook snapping over the least eccentric portion 31 of the eccentric, as shown in figure 3.

The end portion 25 has upper and lower flanges 37,38 which are guided on the outside of flanges 39,40 at the other end portion 34 and thereby secure the end portions in the proper position towards each other.

When a downpipe is assembled, the spike 16 with the plate 17 is first forced into the house wall. The slot 15 of the holder is slipped over the curved inwards flap 20 of the plate so that this is put on the inside of the holder, and the holder is angled down so that the rear end 18 of the spike from outside penetrates the aperture 14 and thereby will carry the holder while the flap 19 on the inside of the holder holds the holder against the plate 17. The locking flap 22 is folded up and locks the lower portion of the holder to the plate. Since the spike 16 is a through pin, it is possible to adjust the position of the spike by forcing it further in, if so required to put all holders in line. The flap 20 and the locking flap 22 is not necessary for the function, but secure the pin 12 and the holder so that they will not be separated in event of external force, e. g. if the downpipe is hit by a car.

When the wall bracket is mounted, the downpipe is inserted into the open holder and the holder is clamped together, as shown in figure 3. The downpipe is not shown in any of the figures. Subsequently, the eccentric is turned by a chisel or the like, which is stuck into the slot 30, to the position shown I figure 4, where the straight portion 29 of the eccentric is adjacent to the hook 35. This position is stable and it requires a relatively large force to turn the eccentric from this position. It's however easy to, with a chisel, turn the eccentric to the position in figure 2 and then unlock the hook 35 from the eccentric 27. The holder provides a certain amount of suspension by the steps which are formed towards the bulge 13 in the back and towards the end portions 25,34.

When the holder should be unlocked, the eccentric is first turned to the delivery position shown in Figure 3. Then, the hook must be unlocked. To this end, there is two small apertures 41,42 in the end portion 25 and corresponding concavenessess 43,44 in the end portion 34. A chisel could be stuck in one of the apertures 41,42 and brace against in the corresponding concaveness 43,44 to move the end portions 25,34 relative each other so that the hook 35 will be unlocked.

The invention is not limited to the shown embodiment, but can be modified in other ways within the scope of the following claims.

## Claims

1. A downpipe holder comprising a bent metal sheet (11), in which the downpipe can be inserted, and means (27,35) at both end portions (25,34) of the metal sheet (11) for engagement with each other to clamp the downpipe in the downpipe holder,
**characterised in that**
said means (27,35) include an eccentric (27,28) rotatably mounted in an aperture (26) at one of the end portions (25) and overlapping the other end portion (34), said eccentric (27,28) being in engagement with said means (35) of the other end portion (34) such that a turning of the eccentric (27,28) clamps the holder around the downpipe.

2. The downpipe holder according to claim 1, **characterised in that** the eccentric (27,28) consists of a metal sheet (27) with a circular raised portion (28), the side of which has an S-shaped cross section and is rotatably mounted in said one end portion (25) by being snapped into said circular aperture (26).

3. The downpipe holder according to claim 2, **characterised in that** said other end portion(34) has its edge bent to a hook (35) arranged to engage with the metal sheet edge of said eccentric (27,28).

## Patentansprüche

1. Fallrohrhalterung, umfassend ein gebogenes Metallblech (11), in das das Fallrohr eingeführt werden kann, und Mittel (27, 35) an beiden Endabschnitten (25, 34) des Metallblechs (11) für den gegenseitigen Eingriff zum Klemmen des Fallrohrs in der Fallrohrhalterung,
**dadurch gekennzeichnet, dass**
die Mittel (27, 35) einen Exzenter (27, 28) aufweisen, der in einer Öffnung (26) an einem der Endabschnitte (25) drehbar montiert ist und den anderen Endabschnitt (34) überlappt, wobei der Exzenter (27, 28) mit dem Mittel (35) des anderen Endabschnitts (34) im Eingriff ist, so dass ein Drehen des Exzenters (27, 28) die Halterung um das Fallrohr klemmt.

2. Fallrohrhalterung nach Anspruch 1, **dadurch gekennzeichnet, dass** der Exzenter (27, 28) aus einem Metallblech (27) mit einem kreisrunden erhöhten Abschnitt (28) besteht, dessen Seite einen S-förmigen Querschnitt aufweist, und durch Einschnappen in die kreisrunde Öffnung (26) in dem einen Endabschnitt (25) drehbar montiert wird.

3. Fallrohrhalterung nach Anspruch 2, **dadurch gekennzeichnet, dass** der andere Endabschnitt (34) an seiner Kante zu einem Haken (35) gebogen ist, der eingerichtet ist, um in die Metallblechkante des Exzenters (27, 28) einzugreifen.

## Revendications

1. Dispositif de maintien d'un tuyau de descente, comprenant une tôle métallique pliée (11) dans laquelle le tuyau de descente peut être inséré et des moyens (27, 35) aux deux parties extrêmes (25, 34) de la tôle métallique (11) pour être engagés l'un sur l'autre afin de serrer le tuyau de descente dans le dispositif de maintien,
**caractérisé en ce que**
lesdits moyens (27, 35) comportent un excentrique (27, 28) monté tournant dans un orifice (26) à l'une des parties extrêmes (25) et qui chevauche l'autre partie extrême (34), ledit excentrique (27, 28) étant en engagement avec ledit moyen (35) de l'autre partie extrême (34) de sorte que le fait de tourner l'excentrique (27, 28) serre le dispositif de maintien autour du tuyau de descente.

2. Dispositif de maintien d'un tuyau de descente selon la revendication 1, **caractérisé en ce que** ledit excentrique (27, 28) consiste d'une tôle métallique (27) avec une partie circulaire en relief (28), dont le côté a une section en forme de S, et est monté tournant dans ladite une partie extrême (25) en y étant clipsé dans ledit orifice circulaire (26).

3. Dispositif de maintien d'un tuyau de descente selon la revendication 2, **caractérisé en ce que** ladite autre partie extrême (34) a le bord plié en crochet (35) agencé pour s'engager dans le bord de tôle métallique dudit excentrique (27, 28).
